# FASCICULE DE BREVET EUROPEEN

(11) **EP 0 811 547 B1**
(45) Date de publication et mention de la délivrance du brevet: **11.08.1999**
(21) Numéro de dépôt: 97401229.6
(22) Date de dépôt: 03.06.1997
(51) Int. Cl.: B62D 65/00, B25B 27/30

(54) **Perfectionnement aux compresseurs de ressorts**
Verbesserung an Federspannern
Improvement in spring compressors

(30) Priorité: 03.06.1996 FR 9606804
(43) Date de publication de la demande: 10.12.1997
(73) Titulaire: MECANIQUE ENERGETIQUE, F-77620 Egreville (FR)
(72) Inventeur: Lambert, Patrick, 45320 Courtenay (FR)
(74) Mandataire: Robert, Jean-Pierre

(56) Documents cités:
- EP-A- 0 398 815
- EP-A- 0 424 247
- DE-A- 4 236 690

## Description

La présente invention concerne les compresseurs de ressorts utilisés pour monter ou démonter les amortisseurs des véhicules automobiles.

Le compresseur de ressort comprend un vérin dont le corps et la tige sont chacun pourvus d'une mâchoire, en général déportée par rapport à l'axe du vérin, chaque mâchoire étant placée en prise sur deux spires du ressort. On déplace ces mâchoires l'une par rapport à l'autre en agissant sur le vérin pour comprimer ou décomprimer le ressort.

L'attache de ces mâchoires au corps et à la tige du vérin est très importante car elle conditionne la sécurité de l'opération. En effet, un ressort comprimé entre deux mâchoires développe une force considérable sur celles-ci qui crée un couple au niveau de leur attache au vérin. Ce couple constitue une sollicitation très forte de l'attache dans le sens de l'attachement de la mâchoire par rapport au vérin.

Il est donc nécessaire d'assurer un bridage mécanique de chaque mâchoire sur le vérin. Actuellement ce bridage est réalisé par des moyens mécaniques de serrage ou de clavetage qui demandent à chaque changement de mâchoire une manipulation de ces moyens mécaniques. On citera à cet éfect le document EP-A- 398 815 qui illustre des moyens d'attelage d'une mâchoire sur un vérin formés par un seil fendu de la mâchoire serré sur une portée de forme correspondante par un écrou contre un épaulement.

Les efforts que doivent supporter ces moyens de bridage exigent l'emploi de l'acier pour leur matériau ce qui alourdit sensiblement le matériel. Enfin, il n'est jamais certain que le bridage a été totalement réalisé et des accidents peuvent de ce fait survenir.

Il est proposé par la présente invention, dans un compresseur de ressort, de nouveaux moyens de bridage plus simples à mettre en oeuvre, n'exigeant de la part de l'utilisateur qu'une manoeuvre élémentaire simple pour accoupler ou découpler les mâchoires à un vérin ces moyens de bridage pouvant être réalisés dans un matériau tel que l'alliage d'aluminium, plus léger que l'acier, donc permetla réalisation d'un compresseur de ressort plus aisé à manipuler sans diminution de la résistance de la liaison mâchoire-vérin.

A cet effet l'invention a donc pour objet un dispositif compresseur de ressort comprenant un vérin et deux mâchoires, chaque mâchoire comportant une partie d'attachement au vérin en forme d'étrier qui débouche dans au moins un évidement cylindrique de diamètre plus grand que la distance séparant les deux branches de l'étrier. Selon l'invention, la partie d'attachement correspondante du vérin est formée par une portée cylindrique comportant deux collerettes distantes axialement l'une de l'autre, l'un des éléments, (portée et au moins une collerette), étant pourvu de méplats parallèles tels que cette partie d'attachement peut être enfourchée par l'étrier dans une position des méplats parallèle aux branches de l'étrier tandis qu'une dimension de cet élément non perpendiculaire aux méplats est sensiblement égale au diamètre de l'évidement cylindrique, les collerettes constituant des butées d'arrêt axial de la mâchoire sur la portée.

L'attachement d'une mâchoire à un vérin de compresseur de ressort se résume alors à faire chevaucher la portée par l'étrier - la portée ou l'une au moins des collerettes étant alors logé dans l'évidement cylindrique-et à faire tourner la mâchoire par rapport à la portée de manière à réaliser un verrouillage qui interdit toute séparation latérale des deux éléments ainsi assemblés. Les collerettes emprisonnent la partie d'attachement de la mâchoire par rapport à la portée selon une direction axiale si bien qu'il n'existe plus de possibilité de mouvement de la mâchoire par rapport à la portée autre qu'une rotation autour de l'axe de cette portée.

De manière préférée on aura prévu des moyens d'indexation entre les parties d'attachement en prise appartenant respectivement à chaque mâchoire et au vérin pour restreindre cette liberté de mouvement relatif et privilégier une position dans laquelle les parties en prise ne peuvent être séparées spontanément.

Dans une première variante de réalisation, l'évidement cylindrique est formé par un lamage réalisé sur au moins l'une des faces d'extrémité c'est-à-dire une face perpendiculaire au plan des branches de l'étrier de la partie d'attachement de chaque mâchoire, le diamètre de la portée étant sensiblement égal à la distance séparant les branches de l'étrier tandis que les méplats parallèles sont ménagés sur la collerette coopérant avec le lamage.

Dans une autre variante de réalisation, l'évidement cylindrique s'étend sur toute l'épaisseur de la partie d'attachement de la mâchoire, les méplats étant alors ménagés sur la portée elle-même et les collerettes étant distantes d'une longueur sensiblement égale à l'épaisseur susdite, le diamètre de ces collerettes étant supérieur à celui de l'évidement cylindrique.

Il est également possible dans une troisième variante de réalisation de prévoir une partie d'attachement de chaque mâchoire sur le vérin qui puisse accepter l'une ou l'autre des mâchoires de compression.

D'autres caractéristiques et avantages de la description ressortiront de la description donnée ci-après de divers modes de réalisation de l'invention.

Il sera fait référence aux dessins annexés parmi lesquels :
- la figure 1 est une vue schématique d'un compresseur de ressort,
- les figures 2 et 3 illustrent un premier mode de réalisation d'une partie d'attachement d'une mâchoire à la tige d'un compresseur conforme à l'invention,
- les figures 4 et 5 sont celles de la partie d'attachement d'une mâchoire susceptible d'être attelée à l'appareil des figures 2 et 3,
- les figures 6 et 7 illustrent une variante de réalisation des figures 2 et 3,
- les figures 8 et 9 sont également l'illustration d'une variante de réalisation des figures 4 et 5,
- la figure 10 illustre un mode particulier de réalisation des moyens d'attachement d'une mâchoire au corps d'un vérin de compresseur de ressort.

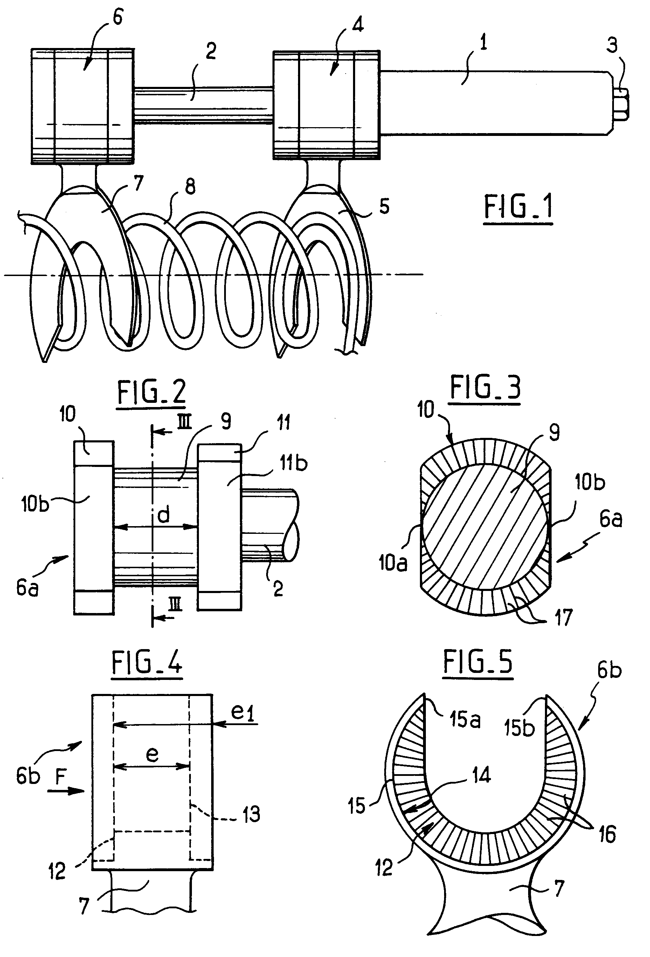

Le compresseur de ressort illustré à la figure 1 comporte un vérin, ici mécanique, constitué d'un corps 1 et d'une tige 2, un écrou de manoeuvre 3 situé à l'extrémité du corps 1 opposée à la tige 2, permettant de faire tourner une vis à l'intérieur du corps 1 où elle est immobilisée en translation, pour faire tourner un écrou attaché à la tige 2 et immobilisée en rotation par rapport au corps 1 de sorte que le vérin se comporte comme un système vis-écrou. A l'extrémité du corps 1 opposée à la vis 3, ce dernier comporte des moyens d'attachement 4 pour une mâchoire de compression 5 qui est déportée par rapportée par rapport à l'axe du vérin. La tige 2 comporte également à son extrémité des moyens 6 d'attachement d'une seconde mâchoire 7 également déportée par rapport à l'axe du vérin pour se trouver en regard de la mâchoire 5. On comprend que lorsque les mâchoires 5 et 7 sont en prise avec une spire d'un ressort 8, la manoeuvre du vérin permet la compression ou la décompression de ce ressort 8.

L'invention concerne les moyens d'attachement 4, 6 des mâchoires au vérin. A la figure 2 on a représenté la partie d'attachement 6a dont est équipée la tige 2 à son extrémité. Cette partie d'attachement est constituée par un manchon cylindrique définissant une portée 9 limitée par deux collerettes 1O et 11, séparées l'une de l'autre dans la direction axiale du manchon d'une distance d déterminée. La figure 3, qui une vue en coupe selon la ligne III-III de la figure 2, illustre le fait que la collerette 10 possède deux méplats parallèles 10a, 10b distants l'un de l'autre d'une valeur sensiblement égale au diamètre de la portée 9. Dans le cas de la figure 2, la collerette 11 possède également deux méplats identiques dont seul le méplat 11b est visible sur la figure.

Les moyens d'attachement 6 de la tige 2 à la mâchoire 7 comportent également une partie 6b solidaire de la mâchoire 7 représentée aux figures 4 et 5. La figure 5 étant une vue suivant F de la figure 4. Cette partie 6b se présente sous la forme d'une fourche à fond semi-circulaire de diamètre égal au diamètre de la portée 9 et dont l'épaisseur e est égale à la distance d séparant les collerettes 10 et 11 de la partie 6a. Sur chacune de ces faces opposées, la partie 6b comporte un lamage 12, 13, le lamage 12, par exemple, définissant un logement cylindrique 14 visible à la figure 5 dont le diamètre est sensiblement égal au diamètre de la collerette 10. La paroi cylindrique 15 de ce logement 14 est interrompue a l'aplomb de l'évidement central de la partie 6b, les deux extrémités 15a et 15b de cette paroi cylindrique 15 formant les branches d'un étrier qui débouche dans le logement cylindrique. La distance séparant ces deux extrémités 15a et 15b qui se font face est sensiblement égale ou légèrement supérieure à la distance qui sépare les deux méplats dont est pourvue la collerette 10, c'est-à-dire égale au diamètre de la portée 9. Dans le cas des figures 4 et 5, il en est de même pour le lamage 13 à l'égard de la collerette 11 et de ses méplats.

On comprend sans difficulté que pour assembler les parties 6a et 6b il suffit d'introduire la portée 9 à l'intérieur de la fourche de sorte que l'épaisseur e de la partie 6b soit placée entre les collerettes 10 et 11, les méplats permettant aux collerettes 10 et 11 de pénétrer dans les lamages 12 et 13. Par une rotation relative des parties 6a et 6b autour de l'axe de la portée 9, les collerettes 10 et 11 sont prisonnières de la paroi cylindrique 15 de chaque lamage ce qui interdit toute séparation latérale des parties 6a et 6b. Le seul degré de liberté entre ces deux parties est une rotation de l'une par rapport à l'autre autour de l'axe longitudinal de la portée 9. Ce degré de liberté ne peut être exploité que lorsque la mâchoire 7 n'est pas soumise à l'effort du ressort 8. En revanche, lorsque le ressort 8 exerce un effort sur la mâchoire 7, le fond du lamage 12 vient s'appuyer fortement sur la surface radiale de la collerette 10 voisine de la portée 9. La friction qui naît de cet appui doit être surmontée pour pouvoir faire tourner la mâchoire 7 par rapport à la tige 2. En charge, le résultat souhaité est d'interdire cette rotation et, pour augmenter cette friction, le fond du lamage 12 peut être pourvu de stries radiales telles que celles 16 représentées à la figure 5 alors que la surface radiale correspondante de la collerette 10 peut être également pourvue de stries homologues 17.

Dans une variante de réalisation de ces moyens d'attachement, la collerette 11 peut être dépourvue de méplats et la partie 6b solidaire de la mâchoire 7 peut être dépourvue de lamage 13. Il faudra alors dans ce cas que la distance d séparant les deux collerettes 10 et 11 soit égale à l'épaisseur el de la partie 6b mesurée entre le fond du lamage 12 et la face extérieure dépourvue de méplats.

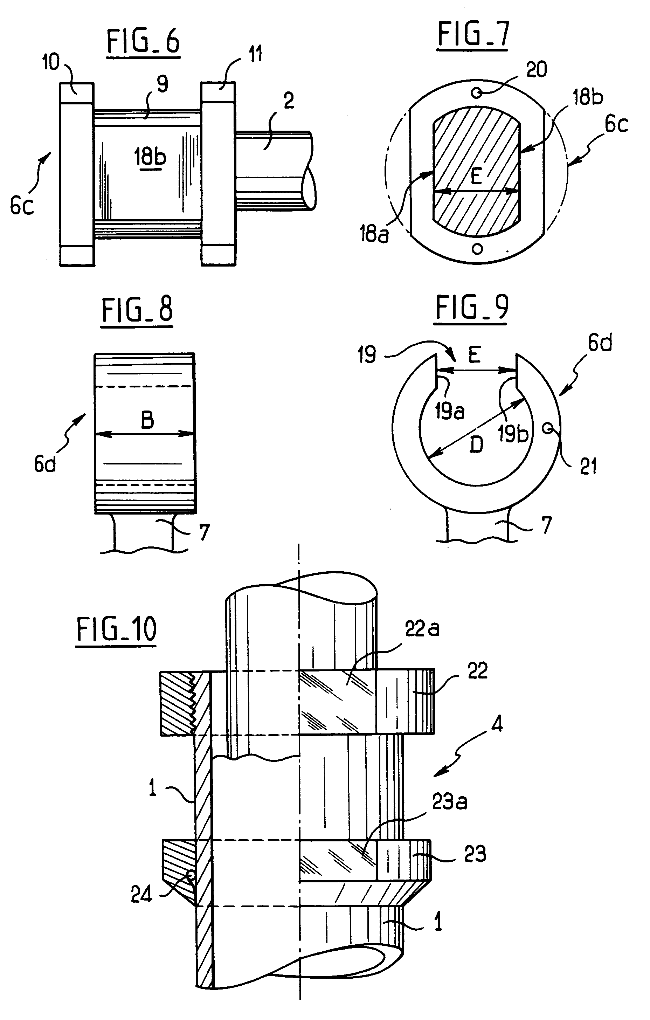

Aux figures 6 et 7 on a illustré de la même manière qu'aux figures 2 et 3 une variante de réalisation de la partie d'attachement 6c portée par la tige 2. Dans cette variante de réalisation, la portée 9 porte également deux collerettes 10 et 11 qui sont ici pourvues de méplats comme dans le cas précédent mais qui peuvent en être dépourvues. En revanche la portée 9 possède deux méplats 18a et 18b parallèles qui réduisent entre eux son épaisseur à une valeur E.

La partie d'attachement 6d appartenant à la mâchoire 7, est représentée aux figures 8 et 9. Cette partie 6d est en forme de bague fendue dont le diamètre intérieur D correspond au diamètre de la portée 9. La fente 19 de cette bague possède deux faces en regard l'une de l'autre 19a, 19b qui sont séparées d'une distance égale à l'épaisseur E de la portée 9 entre ces méplats. La bague fendue forme donc un étrier au niveau de la fente 19 qui débouche dans l'évidement cylindrique de diamètre D. L'épaisseur B (figure 8) de la partie 6d est égale à la distance séparant les deux collerettes 10 et 11 de la partie d'attachement 6c.

Pour assembler les parties 6c et 6d, on introduit la portée 9 dans la bague fendue en faisant glisser ces méplats le long des faces 19a et 19b de la fente 19 puis on fait tourner les deux parties 6c et 6d l'une par rapport à l'autre pour verrouiller l'assemblage. On a représenté en 20 et 21 (figures 7 et 9) des moyens d'encliquetage des deux parties 6c et 6d, par exemple constitués pour le moyen 20 par une bille à ressort faisant saillie de la face de la collerette 10 tournée vers la collerette 11 et pour le moyen 21 par un évidement ménagé sur la face terminale correspondante de la partie 6d. On réalise ainsi une indexation des parties 6c et 6d dans une de leurs positions angulaires relatives, par exemple lorsqu'elles sont tournées de 90° après leur mise en prise. Si les collerettes 10 et 11 possèdent des méplats comme dans le cas de figure précédent, la partie d'attachement 6c peut également recevoir une partie d'attachement identique à celle 6b des figures 4 et 5 si l'épaisseur e de cette partie d'attachement est égale à l'épaisseur B de la partie d'attachement conforme aux figures 8 et 9. La partie d'attachement 6c solidaire de la tige 2 du vérin peut donc recevoir deux types de mâchoires.

La portée 9 et ses collerettes 10 et 11 sont rapportés à l'extrémité de la tige 2 par tous moyens connus par exemple vissage, soudage...

A la figure 10 on a représenté l'extrémité du corps du vérin équipée des moyens d'attachement selon l'invention qui sont ici réalisés par deux bagues 22 et 23 rapportées à distance l'une de l'autre sur l'extrémité du corps de vérin opposée à la tête de vis 3 de manoeuvre, le corps 1 du vérin formant entre ces bagues 22 et 23 la portée 9 des moyens d'attachement décrits précédemment. Les bagues 22 et 23 possèdent également chacune une paire de méplats dont un seul 22a et 23a est visible sur la figure 1O, la bague 23 étant rapportée par frettage sur la portée avec un jonc de verrouillage 24 tandis que, par exemple, la bague 22 est rapportée sur le corps du vérin par vissage ou tout autre moyen équivalent adéquat. De même que précédemment, la bague 23 pourra posséder des stries radiales sur sa face tournée vers la bague 22 afin de créer une immobilisation en rotation de la mâchoire qui lui sera attelée lorsque cette mâchoire sera soumise à l'effort développé par le ressort comprimé ou décomprimé par le décompresseur. Dans un mode de réalisation non représenté, la portée et ses collerettes sont en une seule pièce avec le corps 1 du vérin, réalisé par exemple en fonderie d'alliage d'aluminium. On dispose ainsi d'un compresseur très allégé par rapport au matériel aujourd'hui en acier.

Il est intéressant de noter que les moyens d'attachement d'une mâchoire à un vérin de compresseur de ressort tels que décrits ci-dessus peuvent constituer les modèles d'un support pour des mâchoires qui ne sont pas en service. En effet on peut tout à fait équiper un panneau vertical avec des supports en forme de manchons à collerettes comme ceux décrits ci-dessus qui forment les organes de suspension de toutes les mâchoires d'un jeu de mâchoires destinées à équiper un vérin de compression de ressort. En disposant ces manchons de suspension de sorte que les méplats soient horizontaux, on peut ainsi suspendre les mâchoires à chacun de ces manchons en les enfourchant horizontalement sur ces manchons et en les laissant pivoter vers le bas sous l'effet de la gravité, ce qui verrouille la suspension.

## Revendications

1. Dispositif compresseur de ressort comprenant un vérin et deux mâchoires (5, 7) chaque mâchoire comportant une partie d'attachement (6b, 6d) en forme d'étrier (15a, 15b ; 19a, 19b) qui débouche dans au moins un évidement cylindrique (14, "D") de diamètre plus important que la distance séparant les deux branches (15a, 15b ; 19a, 19b) de l'étrier, caractérisé en ce que la partie d'attachement (6a, 6c) correspondante du vérin est formée par une portée cylindrique (9) comportant deux collerettes (10, 11) distantes axialement l'une de l'autre, l'un des éléments - portée et au moins une collerette - étant pourvu de méplats parallèles (10a, 10b ; 18a, 18b) tels que cette partie d'attachement (6a, 6c) peut être enfourchée par l'étrier dans une position des méplats parallèle aux branches (15a, 15b ; 19a, 19b) de l'étrier, tandis qu'une dimension de cet élément (portée et/ou collerette) non perpendiculaire aux méplats est sensiblement égale au diamètre de l'évidement cylindrique (14, "D"), les collerettes (10 et 11) constituant des butées d'arrêt axial de la mâchoire sur la portée (9).

2. Dispositif selon la revendication 1, caractérisé en ce que l'évidement cylindrique est formé par un lamage (12) réalisé sur au moins l'une des faces d'extrémité de la partie d'attachement (6b) de chaque mâchoire (5, 7), le diamètre de la portée (9) étant sensiblement égal à la distance séparant les branches (15a, 15b) de l'étrier tandis que les méplats (10a, 10b) parallèles sont ménagés sur la collerette (10) coopérant avec le lamage (12).

3. Dispositif selon la revendication 1, caractérisé en ce que l'évidement cylindrique (D) s'étend sur toute l'épaisseur (B) de la partie d'attachement de la mâchoire (6d), les méplats (18a, 18b) étant ménagés sur la portée (9) et les collerettes étant distantes d'une longueur sensiblement égale à l'épaisseur (B) susdite.

4. Dispositif selon la revendication 2, caractérisé en ce que la portée est formée sur le corps du vérin, les collerettes étant formées par deux bagues (22, 23) rapportées sur ce corps et écartées l'une de l'autre.

5. Dispositif selon la revendication 2, caractérisé en ce que la partie d'attachement (portée et collerettes) d'une mâchoire portée par le corps du vérin est en une seule pièce avec ce corps réalisé par fonderie d'alliage léger.

6. Dispositif selon l'une des revendications 2, 4 et 5, caractérisé en ce que chaque collerette (10, 11) est pourvue d'une paire de méplats, la partie d'attachement (6b) de la mâchoire comportant un lamage (12, 13) sur chaque face d'extrémité.

7. Dispositif selon l'une quelconque des revendications précédentes, caractérisé en ce que les deux parties d'attachement en prise (6a, 6b ; 6c, 6d) possèdent des moyens d'indexation (16, 17, 20, 21) coopérant l'un avec l'autre pour maintenir ces parties d'attachement dans une position angulaire relative différente de celle dans laquelle les branches de l'étrier sont parallèles aux méplats.

## Claims

1. A device for compressing a spring, the device comprising an actuator and two jaws (5, 7) each jaw having a U-shaped attachment portion (6b, 6d) leading to at least one cylindrical recess (14, "D") of diameter greater than the distance between the two limbs (15a, 15b; 19a, 19b) of the U-shape, the device being characterized in that the attachment portion (6a, 6c) corresponding to the actuator is formed by a cylindrical bearing surface (9) having two axially spaced-apart collars (10, 11), one of the elements - bearing surface and at least one collar - being provided with parallel flats (10a, 10b; 18a, 18b) such that said attachment portion (6a, 6c) can be engaged via the U-shape in a position of flats parallel to the limbs (15a, 15b; 19a, 19b) of the U-shape, while a dimension of said element (bearing surface and/or collar) that is not perpendicular to the flats is substantially equal to the diameter of the cylindrical recess (14, "D"), the collars (10 and 11) constituting axial stops for the jaw on the bearing surface (9).

2. A device according to claim 1, characterized in that the cylindrical recess is formed by a countersink (12) formed in at least one of the end faces of the attachment portion (6b) of each jaw (5, 7), the diameter of the bearing surface (9) being substantially equal to the distance between the limbs (15a, 15b) of the U-shape while the parallel flats (10a, 10b) are formed on the collar (10) that co-operate with the countersink (12).

3. A device according to claim 1, characterized in that the cylindrical recess (D) extends over the entire thickness (B) of the jaw attachment portion (6d), the flats (18a, 18b) being formed on the bearing surface (9), and the collars being spaced apart by a length that is substantially equal to the above-mentioned thickness (B).

4. A device according to claim 2, characterized in that the bearing surface is formed on the cylinder of the actuator, the collars being formed by rings (22, 23) fitted to said body and spaced-apart from each other.

5. A device according to claim 2, characterized in that the attachment portion (bearing surface and collars) of a jaw carried by the actuator cylinder is integral with the cylinder which is made as a light alloy casting.

6. A device according to any one of claims 2, 4, and 5, characterized in that each collar (10, 11) is provided with a pair of flats, the attachment portion (6b) of the jaw having a countersink (12, 13) on each end face.

7. A device according to any preceding claim, characterized in that the two engaged attachment portions (6a, 6b; 6c, 6d) possess mutually co-operating indexing means (16, 17, 20, 21) for holding the attachment portions in a relative angular position other than that in which the limbs of the U-shape are parallel to the flats.

## Patentansprüche

1. Federspannvorrichtung mit einem Arbeitszylinder und Zwei Klemmbacken (5, 7), wobei jede Klemmbacke ein Befestigungsteil (6b, 6d) in Form eines Büges (15a, 15b; 19a, 19b) hat, der in mindestens eine zylindrische Aussparung (14, "D") mit einem Durchmesser mündet, der größer ist als der Abstand, der die zwei Schenke (15a, 15b; 19a, 19b) des Bügels voneinander trennt, dadurch **gekennzeichnet**, daß das entsprechende Befestigungsteil (6a, 6c) des Zylinders durch eine zylindrische Auflagefläche (9) gebildet ist, die zwei axial voneinander beabstandete Flansche (10, 11) hat, wobei eines der Elemente - Auflagefläche und mindestens ein Flansch - mit parallelen Abflachungen (10a, 10b; 18a, 18b) versehen ist, so daß dieses Befestigungsteil (6a, 6c) durch den Bügel in einer Lage, in der die Abflachungen parallel zu den Schenkeln (15a, 15b; 19a, 19b) des Bügels sind, gabelförmig umfaßt werden kann, während eine Abmessung des Elementes (Auflagefläche und/oder Flansch), die nicht senkrecht zu den Abflachungen ist, im wesentlichen gleich dem Durchmesser der zylindrischen Aussparung (14, "D") ist, wobei die Flansche (10 und 11) in axialer Richtung Stop-Anschläge für die Klemmbacke auf der Auflagefläche (9) bilden.

2. Vorrichtung nach Anspruch 1, dadurch **gekennzeichnet**, daß die zylindrische Aussparung durch eine Vertiefung (12) gebildet ist, die auf mindestens einer der Endflächen des Befestigungsteiles (6b) jeder Klemmbacke (5, 7) ausgebildet ist, wobei der Durchmesser der Auflagefläche (9) im wesentlichen gleich dem Abstand ist, der die Schenke (15a, 15b) des Bügels voneinander trennt, während die parallelen Abflachungen (10a, 10b) an dem Flansch (10) vorgesehen sind, der mit der Vertiefung (12) zusammenwirkt.

3. Vorrichtung nach Anspruch 1, dadurch **gekennzeichnet**, daß die zylindrische Aussparung (D) sich über die gesamte Breite (B) des Befestigungsteiles (6d) der Klemmbacke erstreckt, wobei die Abflachungen (18a, 18b) an der Auflagefläche (9) vorgesehen sind und die Flansche um eine Länge voneinander beabstandet sind, die im wesentlichen gleich der obengenannten Breite (B) ist.

4. Vorrichtung nach Anspruch 2, dadurch **gekennzeichnet**, daß die Auflagefläche an dem Gehäuse des Zylinders ausgebildet ist, wobei die Flansche durch zwei Ringe (22, 23) gebildet werden, die auf das Gehäuse aufgesteckt und voneinander beabstandet sind.

5. Vorrichtung nach Anspruch 2, dadurch **gekennzeichnet**, daß das Befestigungsteil (Auflagefläche und Flansche) einer durch das Gehäuse des Zylinders getragenen Klemmbacke einstückig mit dem Gehäuse ausgebildet ist, das durch Leichtmetallgießen hergestellt ist.

6. Vorrichtung nach einem der Ansprüche 2, 4 und 5, dadurch **gekennzeichnet**, daß jeder Flansch (10, 11) mit zwei Abflachungen versehen ist, wobei das Befestigungsteil (6b) der Klemmbacke auf jeder Endfläche eine Vertiefung (12, 13) hat.

7. Vorrichtung nach einem der vorhergehenden Ansprüche, dadurch **gekennzeichnet**, daß die zwei in Eingriff stehenden Befestigungsteile (6a, 6b; 6c, 6d) Indexierungsmittel (16, 17, 20, 21) haben, die miteinander zusammenwirken, um die Befestigungsteile in einer winkeligen Position zu halten, die sich relativ von der unterscheidet, in der die Schenkel des Bügels parallel zu den Abflachungen sind.
